## Europäisches Patentamt
## European Patent Office
## Office européen des brevets

(19)

(11) Numéro de publication: **0 046 705**
**B1**

(12) # FASCICULE DE BREVET EUROPEEN

(45) Date de publication du fascicule du brevet:
**10.04.85**

(51) Int. Cl.⁴: **F 16 L 47/00**

(21) Numéro de dépôt: **81401285.2**

(22) Date de dépôt: **11.08.81**

(54) Raccord entre une conduite plastique pour fluide sous pression et une conduite métallique.

(30) Priorité: **13.08.80 FR 8017832**

(43) Date de publication de la demande:
**03.03.82 Bulletin 82/9**

(45) Mention de la délivrance du brevet:
**10.04.85 Bulletin 85/15**

(84) Etats contractants désignés:
**BE CH DE FR LI LU NL**

(56) Documents cités:
**CH - A - 93 419**
**FR - A - 399 262**
**FR - A - 2 260 056**
**FR - A - 2 429 958**
**GB - A - 1 116 878**
**GB - A - 1 557 813**
**US - A - 3 158 388**
**US - A - 3 877 734**

(73) Titulaire: **SPIE-BATIGNOLLES, Tour Anjou 33, Quai de Dion-Bouton, F-92806 Puteaux (FR)**
Titulaire: **Branca, Jean-Pierre, 31, Avenue de Tunis, F-94100 Saint Maur des Fosses (FR)**

(72) Inventeur: **Branca, Jean-Pierre, 31, Avenue de Tunis, F-94100 Saint Maur Des Fosses (FR)**

(74) Mandataire: **Lejet, Christian, 31-32, Quai de Dion Bouton, F-92811 Puteaux Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un raccord permettant de relier une conduite en matière plastique pour fluide sous pression et une conduite métallique, raccord utilisé, par exemple, pour une traversée de façade d'un abonné au gaz.

L'alimentation d'un abonné au gaz de ville se fait depuis quelques années au moyen d'une conduite plastique, par exemple en polyéthylène à haute densité. Celle d'un abonné au service des eaux utilise des conduites en polychlorure de vinyle.

La conduite plastique est alors soumise aux mouvements naturels ou accidentels du sol, de la chaussée ou des trottoirs et peut même, au cours de certains travaux de voirie effectués à l'aide de machines d'extraction, subir des efforts accidentels de traction tendant à arracher la conduite plastique du raccord qui la relie à la conduite métallique placée chez l'abonné au gaz.

Parmi les raccords connus actuellement, aucun ne présente de garantie contre un tel arrachement de conduite plastique. En effet, au moment de l'installation on peut assurer un serrage convenable de cette conduite, mais il n'en est plus de même au bout d'un certain temps à cause du fluage de la matière plastique de la conduite et certains efforts de traction tout à fait admissibles au début de la mise en service qui peuvent provoquer par la suite un glissement de cette conduite dans le raccord et finalement l'arrachement de celle-ci.

Le raccord selon l'invention, présente l'avantage, d'une part, d'être autoserrant sous l'effet des efforts de traction appliqués à la conduite plastique, d'autre part, d'avoir son système de serrage fonctionnellement indépendant de son système d'étanchéité.

Il est connu de protéger la conduite plastique dans sa traversée du mur de façade de l'abonné au gaz, par un manchon en acier, scellé dans le mur et dont une extrémité est en saillie côté abonné.

Le raccord, selon l'invention, peut être supporté par cette extrémité du manchon, auquel il transmet tous les efforts mécaniques appliqués aux conduites de gaz. Ce raccord comporte les pièces métalliques à symétrie axiale suivantes:
- une virole rentrant à l'intérieur de l'extrémité de la conduite plastique, munie sur sa face extérieure d'une denture annulaire en contact avec la paroi interne de ladite extrémité et ayant une collerette en butée sur la tranche de la conduite plastique,
- un cône de serrage, par exemple, à plusieurs secteurs séparés par des jeux de compensation et entourant la conduite plastique, muni sur sa face intérieure d'une denture annulaire en contact avec la paroi externe de la conduite plastique ayant une face extérieure conique et une base en butée sur ladite collerette,
- un fourreau de serrage dont une première extrémité a une face extérieure cylindrique et un alésage conique se conjuguant avec la face conique du cône de serrage et dont une seconde extrémité cylindrique a un diamètre intérieur légèrement supérieur au diamètre extérieur de la conduite plastique, les dentures annulaires du cône et du fourreau de serrage ayant un profil en dents de scie dont les fronts sont tournés vers la collerette de la virole,
- un boîtier dont une première extrémité est fixée à la conduite métallique et qui comporte un épaulement intérieur.

Le raccord décrit dans le brevet français FR-A-2 260 056 comprend des éléments constitutifs sensiblement identiques. Toutefois, ils sont agencés de manière différente puisque les fonctions d'étanchéité et de serrage sont intimement liées. En effet, le joint torique qui assure l'une des étanchéités de ce raccord, est disposé de telle manière que l'on ne peut pas contrôler son degré de compression, aussi bien lors de la mise en place du raccord qu'au cours du temps. En outre, il résulte d'une traction exercée sur ce raccord une décompression de ce joint et par suite un risque évident de défaut d'étanchéité à ce niveau. L'étanchéité de l'autre côté est assurée par la pénétration des dents de la bague dans le matériau plastique de la conduite. Du fait du fluage inhérent au matériau plastique et à l'adoption à terme des formes par ce matériau, l'étanchéité à ce niveau ne présente pas une durée de vie acceptable pour un raccord durable.

Enfin, du fait que c'est le fourreau de serrage qui est vissé dans le boîtier, la conduite plastique subit une traction initiale lors de la mise en place du raccord, donc un étirement qui, conjugué avec l'obligation de pénétration initiale des dents dans le matériau plastique nuit à la sécurité requise dans le domaine. Le raccord, selon l'invention, a pour but d'obvier à ces inconvénients en séparant totalement les fonctions de serrage et d'étanchéité, de telle manière que cette dernière soit assurée aussi bien dans le temps (vieillissement des joints), qu'en cas d'accident (traction exercée sur le raccord), favorisant ainsi la sécurité de l'utilisateur. En outre, du fait du fluage possible du matériau plastique, il est préférable que ce matériau ne soit pas profondément blessé lors de la mise en place du raccord. Ainsi, selon l'invention, la denture du cône de serrage ne pénètre réellement dans le matériau plastique qu'en cas de traction exercée sur la conduite. La conduite plastique n'est donc, en pratique, pas soumise à des efforts ni à des blessures sensibles au moment de la mise en place.

Pour atteindre ce but, le raccord selon l'invention est caractérisé en ce que le fourreau de serrage est fixé à demeure, la seconde extrémité du boîtier étant vissée sur le fourreau de serrage fixe lors de la mise en place du raccord jusqu'à ce que l'épaulement intérieur du boîtier vienne en butée sur la collerette de la virole, et en ce que l'étanchéité du raccord est assurée d'une part, par un premier joint torique d'étanchéité logé dans une gorge annulaire faite dans la paroi intérieure de la partie médiane du boîtier, ce premier joint contactant le fourreau de serrage fixe, et d'autre part, par un second joint torique d'étanchéité logé dans une gorge annulaire faite dans la paroi intérieure de la seconde extrémité du fourreau de serrage, ce second joint contactant la conduite en matière plastique, de manière à séparer les fonctions de serrage et d'étanchéité.

D'autres caractéristiques apparaîtront à la lecture de ce qui suit et des revendications dépendantes.

L'invention sera mieux comprise à l'aide d'un exemple de réalisation présentant un axe de symétrie, à savoir l'axe des conduites et à l'aide des dessins annexés où:

la figure 1 représente une vue transversale du raccord avant serrage, avec une vue en coupe au-dessous de l'axe et avec une partie en demi-vue et une partie en coupe au-dessus de l'axe,

la figure 2 représente la vue correspondante à celle de la figure 1 après serrage,

la figure 3 représente une vue semblable aux précédentes du raccord après qu'une traction accidentelle ait été exercée sur la conduite plastique,

la figure 4 représente deux vues de la virole,

la figure 5 représente deux vues du cône de serrage,

la figure 6 représente des demi-vues du fourreau de serrage,

la figure 7 représente des demi-vues du boîtier,

la figure 8 représente le profil en dents de scie de la denture annulaire de la virole.

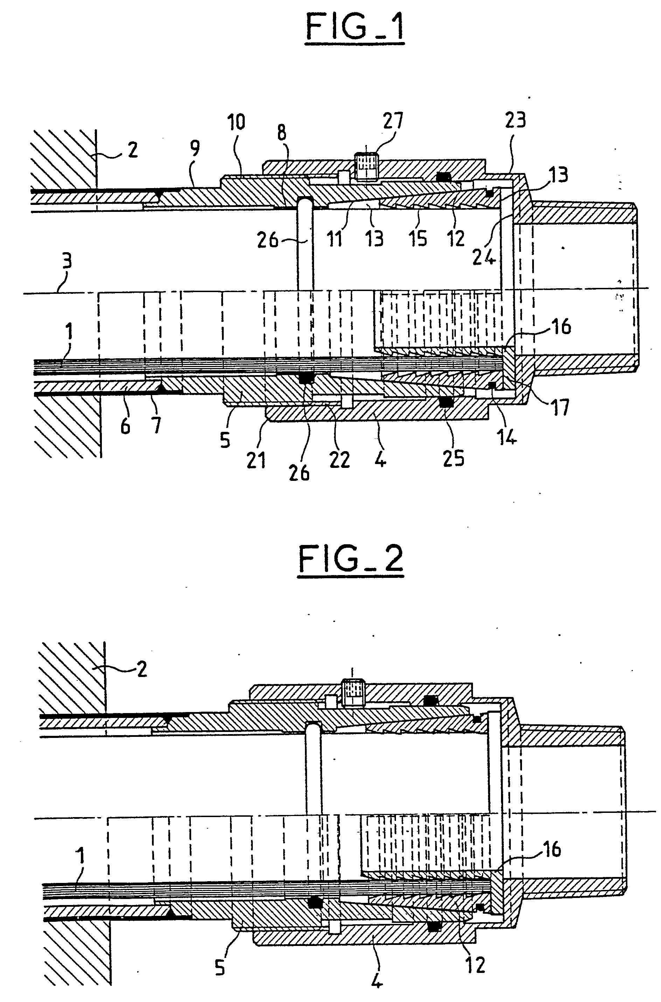

Sur la figure 1, la conduite en matière plastique, par exemple en polychlorure de vinyle ou mieux en polyéthylène à haute densité est représentée en 1 à la sortie de son passage à travers un mur 2.

Le raccord, selon l'invention, est constitué par les différentes pièces en acier décrites ci-après et présentant une symétrie axiale par rapport à l'axe 3 de la conduite 1.

La conduite métallique à laquelle le raccord est fixé par son boîtier extérieur 4 n'a pas été représentée sur le dessin. Elle est par exemple vissée à l'extrémité du boîtier 4 à droite de la figure 1.

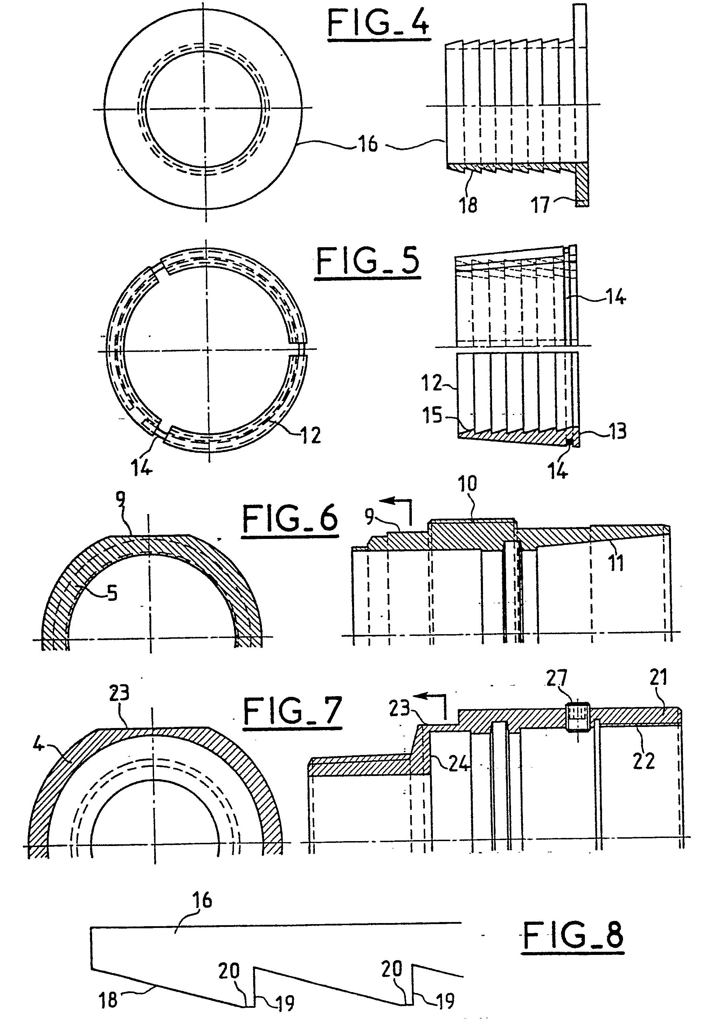

La première pièce à mettre en place au cours du montage du raccord est un fourreau de serrage 5 autour de la partie de la conduite plastique 1 arrivant chez l'abonné au gaz après avoir traversé le mur 2. Un manchon en acier 6 est généralement engagé préalablement autour de l'extrémité de la conduite 1 pour être ultérieurement scellé dans le mur 2 après avoir été enrobé d'une couche isolante 7 en polyéthylène. Dans ce das le fourreau de serrage 5 mis en place après le manchon 6 autour de la conduite 1 peut être fixé à ce dernier par exemple par soudage. L'extrémité côté mur 2 du fourreau de serrage 5 a une face intérieure cylindrique 8 pouvant glisser à frottement doux autour de la conduite 1 et une face extérieure munie de deux méplats de serrage 9 et d'une partie filetée 10. L'autre extrémité est cylindrique extérieurement et comporte un alésage conique 11. Deux demi vues du fourreau 5 sont données à la figure 6 où l'on retrouve les mêmes repères que ceux utilisés à la figure 1.

La deuxième pièce à mettre en place au cours du montage du raccord est un cône de serrage 12 s'engageant partiellement par son sommet dans l'intervalle conique compris entre le fourreau 5 et la conduite 1. Ce cône 12 a, en effet, une face extérieure conique se conjuguant avec l'alésage conique 11 du fourreau et une base plane 13. Deux vues en sont données à la figure 5. Il s'agit d'un cône composé de plusieurs secteurs, trois par exemple sur la figure 5, séparés par un jeu de compensateur et retenus par un jonc d'acier 14 disposé dans une gorge extérieure de sa base.

Les faces coniques du cône 12 et du fourreau de serrage 5 ont une conicité de 15 à 20%.

La face intérieure du cône 12 est munie d'une denture annulaire 15 au profil en dents de scie qui est en contact par le sommet de ses dents avec la paroi extérieure de la conduite 1. Les arêtes des dents sont de préférence tronquées de façon à les rendre non coupantes pour la matière plastique de la conduite 1.

Par exemple, la troncature des dents forme un méplat de révolution d'environ 0,3 mm comme celui indiqué en 20 à la figure 8.

L'extrémité de la conduite 1 est alors sectionnée pour qu'elle arrive au ras de la base 13 du cône de serrage 12 après la mise en place de ce cône à la main entre le fourreau 5 et la conduite 1.

La troisième pièce à mettre en place au cours du montage du raccord est une virole 16 dont un dessin en deux vues est donné à la figure 4. Cette virole 16 est une pièce de révolution selon l'axe 3 qui est introduite à l'intérieur de l'extrémité de la conduite 1 contre la tranche de laquelle elle vient en butée par sa collerette 17 laquelle est également en butée sur la face plane de la base 13 du cône de serrage. Le corps de la virole 16, qui est cylindrique intérieurement est muni sur sa face extérieure d'une denture annulaire 18 en contact par le sommet de ses dents avec la paroi interne de l'extrémité de la conduite 1. Le profil en dents de scie de cette denture 18 est représenté à plus grande échelle sur la figure 8. C'est le même profil que celui de la face intérieure du cône de serrage 12. Les fronts 19 de toutes les dents sont tournés vers la collerette 17 aussi bien pour le cône 12 que pour la virole 16, mais les dents de ces dernières sont décalées de part et d'autre de la conduite plastique de manière à ne pas être en vis à vis.

L'orientation du profil en dents de scie par rapport à la conduite 1 a pour but l'accrochage de l'extrémité de cette conduite à l'intérieur du raccord pour s'opposer à des forces de traction accidentelles sur la conduite 1 car, une fois le raccord monté, le serrage de ce dernier fait pénétrer les dents dans l'épaisseur de cette conduite.

La figure 8 indique la troncature 20 des dents de la virole 16 identique à celle des dents du cône 12.

La quatrième pièce à mettre en place au cours du montage du raccord est le boîtier 4 entourant l'ensemble des pièces précédentes et comportant à son extrémité 21, côté mur 2, un taraudage 22 lui permettant d'être vissé sur la partie filetée 10 du fourreau 5 à l'aide d'une clé, par exemple une clé dynamométrique. Dans ce but, deux méplats 23 sont disposés à quelques centimètres de l'autre extrémité du boîtier 4.

Au cours du vissage, la partie médiane du boîtier 4 glisse à frottement doux sur la face extérieure cylindrique du fourreau 5. L'autre extrémité du boîtier 4, côté opposé au mur 2, c'est-à-dire du côté de la conduite métallique, est munie d'un épaulement intérieur 24 venant en butée sur la collerette 17 de la virole au cours du vissage, ce qui provoque alors, dès que cet épaulement 24 est arrivé en butée, sur la collerette 17, l'avancement relatif du fourreau 5 vers l'extrémité de la conduite plastique et un faible enfoncement des dents du cône de serrage et de la virole dans l'épaisseur de cette conduite.

La figure 7 représente deux demi-vues du boîtier 4.

Pour assurer l'étanchéité du raccord, c'est-à-dire empêcher la fuite du gaz sous pression amené par la conduite plastique 1, deux joints toriques d'étanchéité 25 et 26 sont logés dans des gorges annulaires faites respectivement dans la paroi intérieure de la partie médiane du boîtier 4 pour le premier joint 25 et dans la paroi intérieure de l'extrémité du fourreau de serrage située côté mur 2 pour le deuxième joint 26. On voit que le système d'étanchéité est indépendant du système de serrage.

Ce dernier est complété par un dispositif de blocage, par exemple, comme on le voit sur les figures 1, 2, 3 et 7, au moyen d'une vis pointeau 27 en acier à 6 pans creux, disposée à travers la paroi de la partie médiane du boîtier 4 et serrée par exemple contre le fourreau 5 à l'aide d'une clé mâle hexagonale.

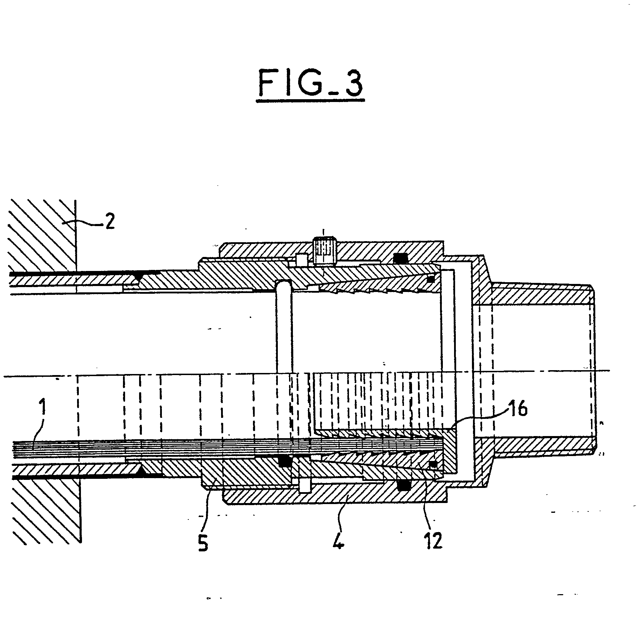

Alors que la figure 1 montre le raccord monté à la main et prêt à être serré, la figure 2 montre la position des différentes pièces du raccord après le serrage contrôlé effectué à la clé dynamométrique par le monteur avant la mise en service de la conduite. La figure 3 montre les déplacements relatifs subis par les pièces du raccord après que la conduite plastique ait été soumise à une traction importante provoquée par exemple par une pelleteuse au cours de travaux de voirie.

On voit, en comparant les figures 1, 2 et 3 que les dents de la virole et du cône se sont enfoncées dans l'épaisseur de la conduite plastique et que, du fait de l'orientation des dents, l'extrémité de cette conduite est retenue à l'intérieur du raccord. De plus, on peut vérifier la propriété d'autoserrage de ce raccord, puisque toute traction exercée sur la conduite 1 provoque automatiquement l'avancement de la virole 16 et du cône de serrage 12 à l'intérieur du fourreau 5, donc un serrage accru de l'extrémité de la conduite 1, bien que le fourreau 5 et le boîtier 4 soient bloqués en position par la vis pointeau 27.

**Revendications**

1. Raccord entre une conduite en matière plastique (1) pour fluide sous pression et une conduite métallique, comportant les pièces métalliques à symétrie axiale suivantes:
— une virole (16) rentrant à l'intérieur de l'extrémité de la conduite en matière plastique (1), munie sur sa face extérieure d'une denture annulaire (15) en contact avec la paroi interne de ladite extrémité et ayant une collerette (17) en butée sur la tranche de la conduite en matière plastique (1),
— un cône de serrage (12) fendu, par exemple à plusieurs secteurs séparés par des jeux de compensation, et entourant la conduite en matière plastique (1), muni sur sa face intérieure d'une denture annulaire en contact avec la paroi externe de la conduite en matière plastique (1), ayant une face extérieure conique et une base (13) en butée sur la collerette (17) de la virole (16),
— un fourreau de serrage (5) dont une première extrémité a une face extérieure cylindrique et un alésage conique (11) se conjuguant avec la face conique du cône de serrage (12) et dont une seconde extrémité cylindrique a un diamètre intérieur légèrement supérieur au diamètre extérieur de la conduite en matière plastique (1),
— les dentures annulaires du cône de serrage (12) et de la virole (16) ayant un profil en dents de scie dont les fronts sont tournés vers la collerette (17) de la virole (16),
— un boîtier (4) dont une première extrémité est fixée à la conduite métallique et qui comporte un épaulement intérieur (24),
ledit raccord étant caractérisé en ce que ledit fourreau de serrage (5) est fixé à demeure, en ce que la seconde extrémité dudit boîtier (4) est vissée sur ledit fourreau de serrage fixe (5) lors de la mise en place dudit raccord jusqu'à ce que ledit épaulement intérieur (24) vienne en butée sur la collerette (17) de ladite virole (16) et en ce que l'étanchéité dudit raccord est assurée d'une part, par un premier joint torique d'étanchéité (25) logé dans une gorge annulaire faite dans la paroi intérieure de la partie médiane du boîtier (4), ce premier joint (25) contactant le fourreau de serrage fixe (5), et d'autre part, par un second joint torique d'étanchéité (26) logé dans une gorge annulaire faite dans la paroi intérieure de la seconde extrémité du fourreau de serrage (5), ce second joint contactant la conduite en matière plastique (1), de manière à séparer les fonctions de serrage et d'étanchéité.

2. Raccord selon la première revendication, caractérisé en ce qu'il comporte un manchon (6) de traversée murale dont une extrémité est soudée à la seconde extrémité du fourreau de serrage (5) et qui est enrobé de polyéthylène (7).

3. Raccord selon l'une quelconque des revendications précédentes, caractérisé en ce que les dentures annulaires de la virole (16) et du cône de serrage (12) ont des arêtes tronquées.

4. Raccord selon l'une des revendications précédentes, caractérisé en ce qu'il comporte des moyens de blocage du boîtier (4) sur le fourreau (5).

5. Raccord selon la revendication 4, caractérisé en ce que les moyens de blocage sont constitués par au moins une vis pointeau (27) disposée à travers la paroi de la partie médiane du boîtier (4) et serrée contre le fourreau (5).

**Claims**

1. Joint between a plastics pipe (1) for fluid under pressure and a metal pipe, comprising the following axially symmetrical metal parts:
- a sleeve (16) extending into the interior of the end of the plastics pipe (1), provided at its external surface with annular teeth (15) in contact with the internal wall of the said end, and having a flange (17) abutting against the end face of the plastics pipe (1),
- a split clamping cone (12), for example having a plurality of sectors separated by compensating gaps, and surrounding the plastics pipe (1), and provided at its internal surface with annular teeth in contact with the external wall of the plastics pipe (1), having a conical external surface and a base (13) abutting against the flange (17) of the sleeve (16),
- a clamping sheath (5) whereof a first end has a cylindrical external surface and a conical bore (11) mating with the conical surface of the clamping cone (12), and whereof a second cylindrical end has an internal diameter slightly greater than the external diameter of the plastics pipe (1),
- the annular teeth of the clamping cone (12) and of the sleeve (16) being of sawtooth form with the faces directed towards the flange (17) of the sleeve (16),
- a casing (4) a first end of which is fixed to the metal pipe and which comprises an internal shoulder (24),

the said joint being characterised in that the said clamping sheath (5) is permanently fixed, in that the second end of the said casing (4) is screwed on to the said fixed clamping sheath (5) when the said joint is positioned until the said internal shoulder (24) comes to abut against the flange (17) of the said sleeve (16), and in that the sealing-tightness of the said joint is achieved on the one hand by a first toroidal sealing ring (25) housed in an annular groove provided in the internal wall of the middle portion of the casing (4), said first sealing ring (25) contacting the fixed clamping sheath (5), and on the other hand by a second toroidal sealing ring (26) housed in an annular groove formed in the internal wall of the second end of the clamping sheath (5), said second sealing ring contacting the plastics pipe (1), in such a manner as to separate the clamping and sealing functions.

2. Joint according to claim 1, characterised in that it comprises a bushing (6) extending through the building wall, one end of the bushing being welded to the second end of the clamping sheath (5) and said bushing being covered with polyethylene (7).

3. Joint according to any one of the preceding claims, characterised in that the annular teeth of the sleeve (16) and of the clamping cone (12) have their tips truncated.

4. Joint according to one of the preceding claims, characterised in that it comprises means for locking the casing (4) on the sheath (5).

5. Joint according to claim 4, characterised in that the locking means are constituted by at least one locking screw (27) extending through the wall of the middle portion of the casing (4) and clamped against the sheath (5).

**Patentansprüche**

1. Verbindung zwischen einer Leitung aus Plastikmaterial (1) für ein unter Druck stehendes fluides Medium und einer metallischen Leitung, mit den folgenden axialsymmetrischen metallischen Teilen:
- eine Hülse (16), die in das Innere des Endes der Leitung aus Plastikmaterial (1) eindringt und an ihrer Aussenfläche mit einer Ringverzahnung (15) versehen ist, die mit der Innenwandung des genannten Endes in Berührung ist, und einen Kragen (17) aufweist, der an der Stirnfläche der Leitung aus Plastikmaterial (1) in Anlage ist,
- ein geschlitzter Spannkonus (12), beispielsweise mit mehreren Sektoren, die durch Kompensationssätze getrennt sind, welcher die Leitung aus Plastikmaterial (1) umgibt und auf seiner Innenfläche mit einer Ringverzahnung versehen ist, die mit der Aussenwandung der Leitung aus Plastikmaterial (1) in Berührung ist, sowie eine konische Aussenfläche und einen Fuss (13) aufweist, der an dem Kragen (17) der Hülse (16) in Anlage ist,
- ein Spannfutter (5), wovon ein erstes Ende eine zylindrische Aussenfläche und eine konische Bohrung (11) aufweist, die der konischen Fläche des Spannkonus (11) entspricht, und wovon ein zweites zylindrisches Ende einen Innendurchmesser aufweist, der etwas grösser als der Aussendurchmesser der Leitung aus Plastikmaterial (1) ist,
- wobei die Ringverzahnungen des Konus (12) und der Hülse (16) ein Sägezahnprofil aufweisen, dessen Stirnflächen gegen den Kragen (17) der Hülse (16) gerichtet sind,
- ein Gehäuse (4), wovon ein erstes Ende an der metallischen Leitung befestigt ist und welches eine Innenschulter (24) umfasst,

wobei die Verbindung dadurch gekennzeichnet ist, dass das genannte Spannfutter (5) dauerhaft befestigt ist, dass das zweite Ende des Gehäuses (4) auf das genannte feste Spannfutter (5) beim Instellungbringen der Verbindung aufgeschraubt wird, bis die genannte Innenschulter (24) in Anlage an den Kragen (17) der genannten Hülse (16) gelangt, und dass die Dichtheit der Verbindung einerseits gewährleistet ist durch eine erste Ringdichtung (25), die in einer Ringnut untergebracht ist, welche in der Innenwandung des mittleren Teils des Gehäuses (4) angebracht ist, wobei diese erste Dichtung (25) mit dem festen Spannfutter (5) in Berührung ist, und andererseits durch eine zweite Ringdichtung (26), welche in einer Ringnut aufgenommen ist, die in der Innenwandung des zweiten Endes des Spannfutters (5) angebracht ist, wobei diese zweite Dichtung mit der Leitung aus Plastikmaterial (1) in Berührung ist, so dass die Funktionen des Verspannens und der Abdichtung voneinander getrennt sind.

2. Verbindung nach Anspruch 1, dadurch gekennzeichnet, dass sie eine Mauerdurchführungsbuchse (6) umfasst, wovon ein Ende an das zweite Ende des Spannfutters (5) angeschweisst ist und die mit Polyäthylen (7) umhüllt ist.

3. Verbindung nach einem der vorstehenden Ansprüche, dadurch gekennzeichnet, dass die Ringverzahnungen der Hülse (16) und des Spannkonus (12) abgestumpfte Kanten aufweisen.

4. Verbindung nach einem der vorstehenden Ansprüche, dadurch gekennzeichnet, dass sie Mittel zur Blockierung des Gehäuses (4) an dem Futter (5) umfasst.

5. Verbindung nach Anspruch 4, dadurch gekennzeichnet, dass die Blockiermittel durch wenigstens eine Klemmschraube (27) gebildet sind, welche die Wandung des mittleren Teils des Gehäuses (4) durchquert und gegen das Futter (5) angespannt ist.

0 046 705

# FIG_1

# FIG_2

7

0 046 705

# FIG_3

9

FIG_4

FIG_5

FIG_6

FIG_7

FIG_8